# EUROPEAN PATENT APPLICATION

(11) **EP 1 816 860 A1**
(43) Date of publication of application: **08.08.2007**
(21) Application number: 06461001.7
(22) Date of filing: 03.02.2006
(51) Int. Cl.: H04N 5/445

(54) **Method and system for controlling of transfer of information contained in signal received by digital television receiver**

(71) Applicant: ADVANCED DIGITAL BROADCAST S.A., 1218 Grand-Saconnex (CH)
(72) Inventor: Gorak, Gracjan, 65-831, Zielona Gora (PL)
(74) Representative: Hudy, Ludwik

(57) **Abstract**

In a system for controlling of a transfer of information contained in a signal (190) received by a digital television receiver (101) comprising an A/V circuit (130) configured to generate an audio and video output signal for a display screen (180) and an ambient sound circuit (170) configured to receive an input signal of ambient sound being a combination of an audio output sound and an ambient or background noise in listening area, a comparison circuit (121) is coupled to the A/V circuit (130) and the ambient sound circuit (170). The comparison circuit (121) of this system is configured to determine an audio output sound level and an ambient noise level. Furthermore, to the comparison circuit (121) is coupled an information messages management block (123), to which a configuration block (124) is coupled providing configuration parameters to manage displaying of information messages on the display screen (180). The information messages management block (123) is able to send the information messages to the display screen (180) in response to a comparison result of the audio output sound level, the ambient noise level and the configuration parameters received from the configuration block (124).

## Description

The present invention relates to a method for controlling of a transfer of information contained in a signal received by a digital television receiver and a system for controlling of a transfer of information available, for example, in digital cable, terrestrial or satellite audio/video signals received by a digital television receiver. The particular problem, addressed by the present invention, is how to allow video signal viewers to receive the audio signal's message when this message is not sufficiently audible.

Nowadays the ambient sound monitoring systems are often used in modern car audio systems. Their task is to increase the audio output sound volume when the ambient noise sound disturbs listening to the music. By determining the amount and level of the noise present in the listening area, the audio system can select an appropriate output level for the source signal, so that the sound being output has an adequate volume. Such system is known from the patent application US 20050063552 A1, entitled "Ambient noise sound level compensation", which presents a method with real-time measurements of the noise, with ongoing adjustments of the source signal's output level.

Another publication on ambient sound monitoring is the patent US 5,793,874, entitled "Control circuit", which presents volume control device inserted in a circuit between an output of a sound system amplifier and a loudspeaker. The volume control device measures ambient noise in the music environment and adjusts the power transferred to the loudspeaker.

These solutions are not sufficient because the user may not wish to change the current volume level of the audio output signal while still keeping the possibility of being aware of what is the current content of the audio output signal.

It is the object of the present invention to allow users, without any further activities, to understand the content of the audio/video output signal being viewed during varying ambient sound conditions in the listening area, for example, when the reception of audio, due to disturbing ambient sound conditions, is hindered or impossible.

The idea of the invention is that in a system for controlling of a transfer of information contained in a signal received by a digital television receiver comprising an A/V circuit configured to generate an audio and video output signal for a display screen and loudspeakers, and an ambient sound circuit configured to receive an input signal of ambient sound being a combination of an audio output sound and an ambient or background noise in listening area. The comparison circuit is coupled to the A/V circuit and the ambient sound circuit, whereby the comparison circuit is configured to determine an audio output sound level and an ambient noise level, and whereby to the comparison circuit is coupled an information messages management block, to which a configuration block is coupled for providing configuration parameters to manage displaying on the display screen information messages contained in the signal, whereas the information messages management block is able to send the information messages to the display screen in response to an analysis of the audio output sound level, the ambient noise level and the configuration parameters received from the configuration block.

The information message can be at least one of closed captioning or subtitles or a specified teletext page.

Preferably, the ambient sound circuit receives the ambient sound input signal via a microphone circuit and/or transmission means from a remote circuit.

It is of special advantage that a trigger signal causing a display of the information message is output when the output audio sound volume is equal to and/or when it is below a minimum level or background noise in the listening area reaches predefined ratio between the audio output sound level and the ambient noise level and the information message is displayed when the trigger signal has been active for a predefined period of time defined by the configuration parameters.

The information messages management block can comprise a timer reset and started upon each change of the trigger signal.

The object of the present invention is also achieved with a system for displaying information message, the system comprising an A/V circuit configured to generate a video and audio output signals for a display screen and loudspeakers, and an ambient sound circuit configured to receive an input signal of ambient sound being a combination of an audio output sound and an ambient or background noise in listening area. The information message displaying system further comprises a comparison circuit coupled to the A/V circuit and the ambient sound circuit, configured to perform a comparison of the audio output signal with the ambient sound input signal and to determine a volume level of the ambient or background noise, and configured to generate a trigger signal as a function of levels of the ambient or background noise and the audio output signal. Additionally it comprises an information messages management block for receiving the trigger signal from the comparison circuit, configured to manage the displaying, on the display screen, the information messages in response to the trigger signal, and for allowing configuration of the system and a configuration block coupled, via a link, to the comparison circuit, for providing parameters for generating the trigger signal.

According to the present invention there is provided a method for controlling of a transfer of information contained in a signal received by a digital television receiver consisting of an audio circuit configured to generate a video and audio output signals for a display screen and loudspeakers, and an ambient sound circuit configured to receive an input signal of ambient sound being a combination of an audio output sound and an ambient or background noise in listening area. The method comprises the steps of sending to the digital television receiver the signal containing A/V data and textual data related to the A/V data; processing the input signal of the ambient sound; determining a volume level of the ambient or background noise in the listening area; determining a volume level of the audio output sound; storing both the volume level of the ambient or background noise in the listening area and the volume level of the audio output sound; reading configuration parameters; processing the stored both volume levels by applying configuration parameters and outputting a trigger signal; and displaying, in response to the trigger signal, an information message contained in the textual data on a display screen.

The invention will now be described by way of an example and with reference to the accompanying drawings in which:
Fig. 1 shows a simplified block diagram of the digital television decoder, containing only elements required for presenting the idea of the method according to the invention;
Fig. 2 shows possible conditions of the system operation in real-time;
Fig. 3 shows a flow chart of a procedure of subtitles management according to ambient sound conditions; and
Fig. 4 shows a screen of possible system configuration options.

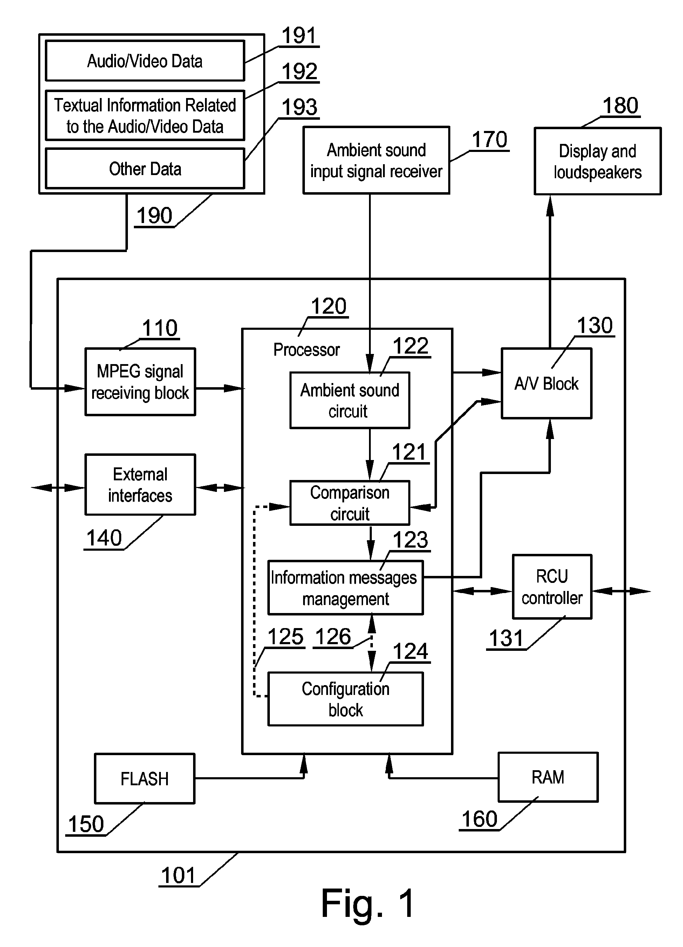

A decoder 101 of digital television, to which the solution according to the present invention may be applied, is divided into many modules, and for the purpose of illustration its simplified version is shown in Fig. 1.

The decoder 101 of digital television receives a television data signal 190, for example MPEG stream, from a signal broadcaster. The television data signal 190 typically comprises audio/video data 191, textual data 192 consisting of textual information, text or textual information messages related to the audio/video data 191 (for example subtitles or teletext) and other data 193, for example stream content control data or applications data. The textual data 192 related to the audio/video data 191 are prepared on the basis of the audio/video data 191 before transmitting the television data signal 190 to the decoder 101.

The most important module of the decoder is a processor 120, which comprises a comparison circuit 121, an ambient sound circuit 122, an information messages management 123 and a configuration block 124. The comparison circuit 121 is configured to perform a comparison of an audio output signal with an ambient sound input signal and to determine a volume level of ambient or background noise, and configured to generate a trigger signal to display, on the display screen 180, a textual information message or a text created from the textual data 192 or included in the textual data in response to a comparison result and the volume level of the ambient or background noise and the duration of the ambient or background noise at a given level.

The comparison circuit 121 is coupled to the ambient sound circuit 122, supplying the ambient sound signal for comparison, and an A/V block 130 comprising the audio circuit and video circuit generating the audio output signal and video output signals including OSD (On-Screen-Display) typically used to display the textual information messages, including subtitles, to TV program viewers. It is advisable to monitor and analyze the audio output sound when the audio output sound is received as a part of the ambient sound, since in many cases the audio output sound is generated by a separate amplifier, which defines the final sound conditions. In such case the audio output signal is provided from the A/V block 130 to the separate, external amplifier and then output to the loudspeakers 180.

In turn, the ambient sound circuit 122 is configured to receive the ambient sound input signal, which is a combination of the audio output sound and the ambient or background noise in listening area. This block receives the ambient sound signal from the ambient sound signal input receiver 170. The ambient sound input signal can be received, for example, via a microphone circuit or via a transmission means from remote circuit configured for providing ambient sound data to the decoder 101 of digital television. The transmission means is preferably a wireless communication system. The comparison circuit 121 is connected to the information messages management block 123, which can program or provide information for the A/V block 130 to display an information message selected from the textual data, for example subtitles, on the OSD layer of the output video signal, which is output to the display and loudspeakers 180.

The information messages management block 123 is bidirectionally coupled, via a configuration link 126, to the configuration block 124, which allows storing and fetching the configuration parameters of the system. This link is used during system configuration by the user and later for setting the conditions of generating the trigger signal by the comparison circuit 121. In case when the configuration parameters are analyzed in the information messages management block 123, the comparison circuit 121 sends all the information, related to the sound conditions, to the information messages management block 123. Then the information messages management block 123 applies the configuration parameters and instructs the A/V block 130. The information related to the sound conditions are preferably audio output sound level and ambient noise level.

In another embodiment the comparison circuit 121 is directly connected, via the link 125, to the configuration block 124. In such case the information messages management block 123 manages the system configuration, via the configuration link 126, and communicates the trigger signal to the A/V block 130, while comparison circuit 121 reads the system configuration upon system startup and analyzes the sound conditions, in the listening area, in order to output the trigger signal instead of sending all the information, related to the sound conditions, to the information messages management block 123 as presented in the first embodiment.

In order to store the system configuration the configuration block 124 has a built-in non-volatile memory. In another embodiment the digital television decoder's 101 non-volatile memory 150 can be used to sore the system configuration.

The links 125 and 126 may be present in the system, however, in the first embodiment the configuration link 126 is required and in the second embodiment the link 125 is required.

In another exemplary of embodiment, the blocks 121, 122, 123 and 124 can be separate modules placed outside the processor 120 and similarly the ambient sound signal input receiver 170 can be placed within the casing of the decoder 101 of digital television.

The receiver also provides a signal from an MPEG signal reception block 110 to the processor 120. The MPEG stream is hereby referenced for exemplary purposes only and therefore other audio/video data coding and transmission standards may be used.

Additionally, the processor has a possibility of bi-directional exchange of data via external interfaces 140. The digital television decoder 101 includes also a few types of memory, which are bi-directionally connected with the processor 120. These are the non-volatile memory (for example, of FLASH type 150) and operational RAM memory 160. There are programs for controlling the operation of the digital television decoder 101 stored in these memories.

The block A/V 130 and the remote control unit block 131 allow respectively transmitting the output A/V signal and communicating with external control devices, for example a remote control unit.

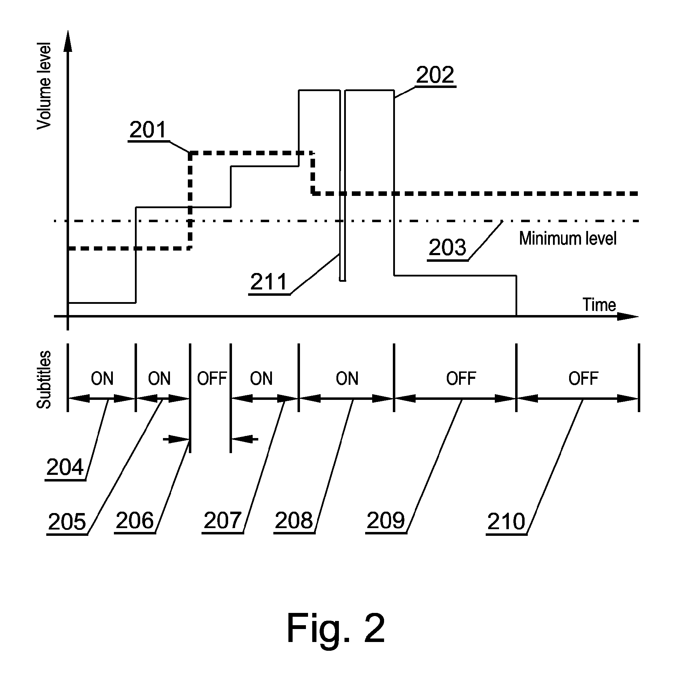

Fig. 2 presents of possible conditions of the system operation in real-time. The diagram presents varying volume levels of both the audio output sound 201 and the ambient or background noise 202 in the listening area, which can be obtained by analyzing the ambient sound in comparison to the audio output sound. The system has also a minimum audio output sound volume level 203, below and/or at which displaying of the text or the textual information messages related to a viewed program, for example subtitles, is switched on regardless of other sound conditions. Therefore in zones 204 and 205 the subtitles were displayed even though the audio output sound 201 was clearly audible in the zone 204. In a zone 206, the ambient or background noise 202 in the listening area was below the level of the audio output sound 201 and the audio output sound 201 was above the level 203, therefore the subtitles were switched off. In a time zone 207, the ambient or background noise in the listening area 202 increased and was very close to the volume level of the audio output sound 201, that is why the subtitles were switched on. They remained switched on in a zone 208 since the ambient noise level 202 was above the volume level of the audio output sound 201 and the 201 signal's volume was above the minimum level 203, for a predefined period, at the same time. The abrupt volume level change 211 did not last sufficiently long to switch the subtitles off. In the last two zones 209 and 210 the ambient noise volume level fell below the audio output sound 201 volume level and the subtitles remained switched off because the volume of the 201 signal was above the minimum 203.

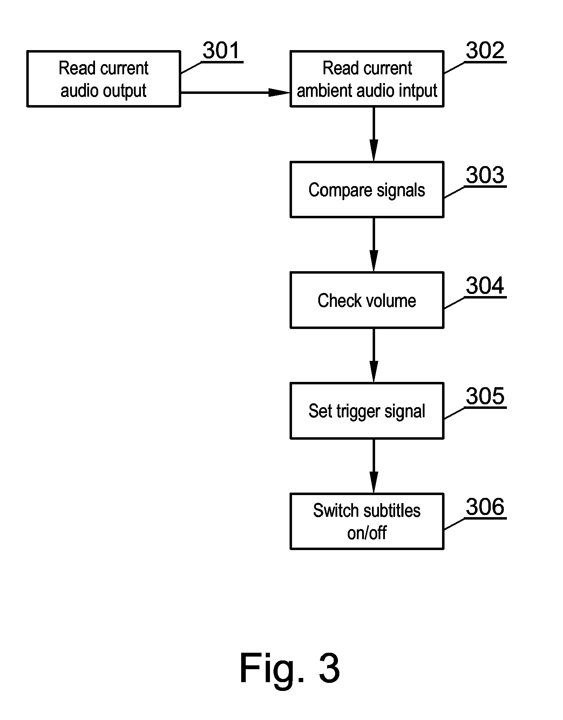

Fig. 3 shows a procedure of subtitles management according to ambient sound conditions. The procedure starts in steps 301, 302 from inputting the ambient sound signal and the audio output signal to the comparison circuit 121. Then in step 303 the signals are compared to determine the amount and the volume of background noise that may be disturbing to a user, is checked in step 304. If the output audio sound volume is below the minimum level or the background noise in the listening area reaches pre-defined ratio between the audio output sound level and the ambient noise level (i.e. the noise volume is below but close to or above the level of the output audio) the trigger signal is output in step 305 to the subtitles management block and the subtitles are switched on or off in step 306. Every time the trigger signal changes its state, a timer is started, which, when the time reaches predefined amount, affects the displaying of subtitles on the television set.

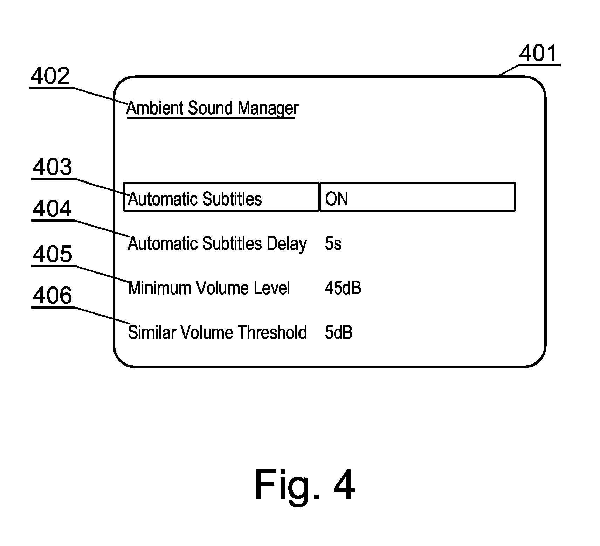

Fig. 4 shows a screen of possible system configuration options. The ambient sound manager 402, presented on a television set screen 401, is an example only for presenting four possible options 403-406 of the system according to the invention. The first option 403 allows a user to switch the system on or off. The second option 404 is automatic subtitles delay, which defines the response time to trigger signal. In this case any change to the subtitles status can occur when the new state of the ambient sound conditions have remained constant for five seconds. The third option 405 is a minimum volume level of the audio output sound at and/or below which the subtitles will be always switched on. In the example this value is set to 45dB. The last presented option 406 is the similar volume threshold. This option is useful for ambient noise sounds, which are similar in volume to the audio output sound and therefore are disturbing. In the presented example this level is set to 5dB. It means that when for example the level of audio output sound is 65dB and the volume level of background noise is 61dB, the subtitles will be switched on.

The invention is most suitable for audio/video systems, which are capable of receiving and displaying text information related to the current video content. In particular the text information is subtitles (preferably in various languages), closed captioning or a selected teletext page. The displaying of such information is managed in response to ambient sound conditions.

The present invention, therefore, is well adapted to carry out the objects mentioned. While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention.

## Claims

1. A system for controlling of a transfer of information contained in a signal (190) received by a digital television receiver (101) comprising an A/V circuit (130) configured to generate an audio and video output signal for a display screen (180) and loudspeakers, and an ambient sound circuit (170) configured to receive an input signal of ambient sound being a combination of an audio output sound and an ambient or background noise in listening area **characterized in that** a comparison circuit (121) is coupled to the A/V circuit (130) and the ambient sound circuit (170), whereby the comparison circuit (121) is configured to determine an audio output sound level and an ambient noise level, and whereby to the comparison circuit (121) is coupled an information messages management block (123), to which a configuration block (124) is coupled for providing configuration parameters to manage displaying on the display screen (180) information messages contained in the signal (190), whereas the information messages management block (123) is able to send the information messages to the display screen (180) in response to analysis of the audio output sound level, the ambient noise level and the configuration parameters received from the configuration block (124).

2. System according to claim 1, **characterized in that** the information message is at least one of closed captioning or subtitles or a specified teletext page.

3. System according to claim 1, **characterized in that** the ambient sound circuit (122) receives the ambient sound input signal via a microphone circuit.

4. System according to claim 1, **characterized in that** the ambient sound circuit (122) receives the ambient sound input signal via transmission means from a remote circuit.

5. System according to claim 1, **characterized in that** the information message is displayed when a volume level of the audio output sound (201) is equal to and/or when it is below the predefined minimum level (203) as defined by the configuration parameters.

6. System according to claim 1, **characterized in that** the information message is displayed when the ambient or background noise in the listening area reaches predefined ratio, defined by the configuration parameters, between the audio output sound (201) level and the ambient noise level (202).

7. System according to claim 1, **characterized in that** a trigger signal causing a display of the information message is output when the output audio sound volume is equal to and/or when it is below a minimum level or background noise in the listening area reaches predefined ratio between the audio output sound level and the ambient noise level and the information message is displayed when the trigger signal has been active for a predefined period of time defined by the configuration parameters.

8. System according to claim 1, **characterized in that** a trigger signal is output when the output audio sound volume is equal to and/or when it is below a minimum level or background noise in the listening area reaches predefined ratio between the audio output sound level and the ambient noise level and that the information messages management block (123) comprises a timer reset and started upon each change of the trigger signal.

9. A system for displaying information message, the system comprising an A/V circuit (130) configured to generate a video and audio output signals for a display screen (180) and loudspeakers, and an ambient sound circuit (170) configured to receive an input signal of ambient sound being a combination of an audio output sound and an ambient or background noise in listening area **characterized in that** the information message displaying system further comprises
a comparison circuit (121) coupled to the A/V circuit (130) and the ambient sound circuit (170), configured to perform a comparison of the audio output signal with the ambient sound input signal and to determine a volume level of the ambient or background noise, and configured to generate a trigger signal as a function of levels of the ambient or background noise and the audio output signal;
an information messages management block (123) for receiving the trigger signal from the comparison circuit (121), configured to manage the displaying, on the display screen (180), the information messages in response to the trigger signal, and for allowing configuration of the system; and
a configuration block (124) coupled, via a link (125), to the comparison circuit (121), for providing parameters for generating the trigger signal.

10. A method for controlling of a transfer of information contained in a signal received by a digital television receiver consisting of an A/V circuit configured to generate a video and audio output signals for a display screen and loudspeakers, and an ambient sound circuit configured to receive an input signal of ambient sound being a combination of an audio output sound and an ambient or background noise in listening area, the method comprising the steps of
sending to the digital television receiver the signal containing A/V data and textual data related to the A/V data;
processing the input signal of the ambient sound;
determining a volume level of the ambient or background noise in the listening area;
determining a volume level of the audio output sound;
storing both the volume level of the ambient or background noise in the listening area and the volume level of the audio output sound;
reading configuration parameters;
processing the stored both volume levels by applying configuration parameters and outputting a trigger signal; and
displaying, in response to the trigger signal, an information message contained in the textual data on a display screen.

11. Method according to claim 10, **characterized in that** the information message is at least one of closed captioning or subtitles or a specified teletext page.

12. Method according to claim 10, **characterized in that** the information message is displayed when the trigger signal has been active for a predefined period of time defined by the configuration parameters.

13. Method according to claim 10, **characterized in that** the configuration parameters comprise at least one of minimum volume level or similar volume threshold.
